# EUROPÄISCHE PATENTSCHRIFT

(11) **EP 2 022 614 B1**
(45) Veröffentlichungstag und Bekanntmachung des Hinweises auf die Patenterteilung: **26.10.2011**
(21) Anmeldenummer: 08014205.2
(22) Anmeldetag: 08.08.2008
(51) Int. Cl.: B29B 9/14, B29B 7/92

(54) **Schüttfähiges Zwischenprodukt zum Herstellen fester Körper**
Bulk intermediate product for producing solid bodies
Produit intermédiaire coulant destiné à la fabrication de corps solides

(30) Priorität: 08.08.2007 DE 102007037392
(43) Veröffentlichungstag der Anmeldung: 11.02.2009
(73) Patentinhaber: J. Rettenmaier & Söhne GmbH + Co. KG, 73494 Rosenberg (DE)
(72) Erfinder: Ungerer, Armin, 74564 Crailsheim (DE); Weiss, Andreas, 73479 Ellwangen (DE)
(74) Vertreter: Weitzel, Wolfgang

(56) Entgegenhaltungen:
- EP-A2- 0 865 891
- US-A- 5 938 994
- US-A- 5 985 429

## Beschreibung

Die Erfindung betrifft ein schüttfähiges Zwischenprodukt zum Herstellen fester Körper wie Möbel, Bodenbeläge, Bretter für den Innenausbau, Deckings Claddings und anderes mehr. Dabei wird aus dem Zwischenprodukt durch ein Formgebungsverfahren der feste Körper als Endprodukt erzeugt. Das Formgebungsverfahren kann beispielsweise ein Gießverfahren, ein Spritzverfahren oder ein Extrudierverfahren sein.

Bei Gegenständen des täglichen Bedarfs wie Gartenmöbel, Deckings und Fassadenverkleidungen, besteht der Wunsch nach Dauerhaftigkeit und Beständigkeit gegen äußere Einflüsse, beispielsweise des Wetters. Deswegen nutzt man die Vorzüge von Kunststoffen. Gleichzeitig wird aber auch Holz als natürlicher Rohstoff aus ästhetischen, emotionalen und umweltschonenden Gründen sehr geschätzt. Der Nachteil besteht darin, dass die Oberfläche in höherem Maße anfällig gegen äußere Einwirkungen, beispielsweise des Wetters (Licht und Regen) ist.

Ein Kompromiss besteht darin, ein Zwischenprodukt oder Halbstoff als Ausgangsmaterial für die genannten Festprodukte zu verwenden. Dabei treten verschiedene Probleme auf: Zum einen soll das aus dem Zwischenprodukt gefertigte Endprodukt eine hohe Zugfestigkeit, eine hohe Biegefestigkeit, ausreichende Schlag- und Kerbschlagfestigkeiten und sehr hohe Stelfigkeiten (hohe Biege- und Zug E-Module) aufweisen. Zum anderen soll das Endprodukt ein ästhetisches Aussehen aufweisen und gegenüber Bewitterung formstabil und "wartungsarm" (kein Behandeln der Oberfläche zum Beispiel durch Streichen mit Farbe und Schutzlacken) sein.

Es gibt zahlreiche Zwischenprodukte, die ein Gemisch aus Kunststoffen und aus natürlichen Fasern sind. Diese Gemische wurden bevorzugt über Extrusionsverfahren aus einem Kunststoff und Fasern erzeugt, da man der Meinung war, dass nur die Extrusionstechnologie ein ausreichendes Aufschmelzen und Plastifizieren des Kunststoffes ermöglicht. Dies wurde wiederum als Voraussetzung dafür angesehen, dass bei der Weiterverarbeitung ein homogenes und optimal dispergierbares Compound vorliegt, was seinerseits die Grundlage für Endprodukte mit hohen mechanischen und ästhetischen Qualitäten ist. Nachteilig an diesem Verfahren sind die relativ hohen Produktionskosten sowie die begrenzte Ausstoßielstung von Extrudern.

US 5 938 994-A1 offenbart ein Zwischenprodukt gemäß dem Oberbegriff des Anspruchs 1.

Überraschenderweise hat sich gezeigt, dass anstelle der Extrusion auch die Pelletierung oder Kompaktierung Zwischenprodukte der oben beschriebenen Art liefert, welche zu Endprodukten verarbeitet werden können, welche die genannten mechanischen und optischen Kriterien aufweisen. Obwohl die Pelletierung oder Kompaktierung im Vergleich zur Extrusion bei wesentlich niedrigeren Temperaturen arbeitet, bei denen PVC noch gar nicht schmilzt, und zudem keine dem Extruder vergleichbaren Scherkräfte zur Plastifizierung des Kunststoffs vorliegen, können qualitativ hochwertige Zwischenprodukte hergestellt werden, die mittels üblicher Kunststoffverarbeitungstechnologien wie Extrusion, Spritzguss usw. weiterverarbeitet werken können. Wichtig ist in diesem Zusammenhang auch die Auswahl der für den jeweiligen Anwendungsfall geeigneten Faser sowie des optimalen Mischverhältnisses.

Die Oberflächen derartiger, aus pelletierten Zwischenprodukten hergestellten Fertigprodukte zeigen oftmals Unregelmäßigkeiten, die vordergründig auf eine Agglomeration von Fasern zurückgehen. Als Abhilfe hat man eine stärkere Desintegration und Durchmischung bei der Verarbeitung des Zwischenproduktes betrieben, jedoch ohne Erfolg.

Der Erfinder hat zwei wichtige Kriterien erkannt, die für die Agglomeration verantwortlich sind, nämlich die Faserlänge sowie den Feuchtigkeitsgehalt. Der Erfindung liegt die Aufgabe zugrunde, ein Zwischenprodukt anzugeben, das ein einwandfreies, homogenes, von Agglomerationen freies Endprodukt ergibt. Diese Aufgabe wird mit einem Zwischenprodukt gelöst, das die kennzeichnenden Merkmale von Anspruch 1 aufweist, Demgemäß muss der Feinstoffantell der natürlichen Fasern sehr hoch sein; die natürlichen Fasern müssen demgemäß eine extrem geringe Länge haben. Ferner müssen die natürlichen Fasern und damit das Zwischenprodukt als solches einen sehr niedrigen Feuchtegehalt haben.

Den Erfindern ist es gelungen, das sehr feinfühlige und schwierige Verhältnis der Gewichtsanteile zwischen den natürlichen Fasern einerseits und dem thermoplastischen Kunststoff anderseits zu definieren.

Unter natürlichen Fasern versteht man Fasern aus pflanzlichen Rohstoffen, die mechanisch und/oder chemisch aufgereinigt sein können. Eingeschlossen sein sollen auch alle Produkte aus diesen Rohstoffen, die aufgrund starker Zerkleinerung nur noch wenig oder keinen typischen Fasercharakter mehr tragen, sondern eher aus kubischen Partikeln bestehen.

Bisher war man der Meinung, dass sich Feinanteile im Hinblick auf gute mechanische Eigenschaften eher nachteilig auswirken. Dies ist jedoch überraschenderweise nicht der Fall. Zudem führen feine Fasern zu einer optisch homogenen und zugleich sehr glatten Oberfläche. Letztere Eigenschaft ist wiederum besonders vorteilhaft für Endprodukte, die im Außenbereich eingesetzt werden sollen beziehungsweise bei deren Einsatzgebiet es zu Kontakt mit Feuchtigkeit kommt, da glatte Oberflächen zu einer reduzierten Feuchtigkeitsaufnahme führen und alle hieraus resultierenden Probleme wie Quellen, Volumenveränderung usw. verringert werden.

Das schüttfähige Zwischenprodukt kann in Pelletform oder in Granulatform vorliegen. Letzteres erreicht man zum Beispiel dadurch, dass man die beim Pelletiervorgang entstehenden Pellets oder die durch Kompaktierung enthaltenen größeren Granulate aufbricht und dadurch kleinere Bruchstücke mit größerer Oberfläche schafft. Dies kann besonders vorteilhaft sein, da die größere Oberfläche eine leichtere Dispergierbarkeit im nachfolgenden Verarbeitungsprozess zum Endprodukt ermöglicht. Die natürlichen Fasern sind Fasern auf pflanzlicher Basis, insbesondere auf Holzbasis beziehungsweise zellulosische Fasern, das heißt Fasern mit einem erheblichen Anteil an Zellulose. Auch der Kunststoff kann in Faserform vorliegen.

Unter Pellets beziehungsweise Granulaten versteht man alle Formkörper, welche aus feineren Primärpartikeln zusammengesetzt sind und durch äußere Einflüsse wie Druck usw. auf einer Pelletpresse oder einem Walzenkompaktor zu größeren Sekundärpartikeln geformt wurden.

Die Pelletpresse kann eine Ringmatrizenpresse mit 2 oder mehr Kollern sein oder eine Flachmatrizenpresse mit 2 oder mehr Kollern. Die verwendeten Matrizen können Lochdurchmesser von 2 mm bis 10 mm und Presswege von 5 mm bis 150 mm aufweisen.

Es ist zweckmäßig sein, das Zwischenprodukt in der Art und Weise herzustellen, dass aus den Fasern zusammen mit dem Kunststoff unter nicht sehr hohen Drücken und relativ niedrigen Produkttemperaturen (< 150 °C) Pellets beziehungsweise Granulate entstehen, weiche bei der Weiterverarbeitung zum Endprodukt desintegrieren und durch in der Kunststoffverarbeitung übliche Formgebungsverfahren zum gewünschten Endprodukt geformt werden.

Bei der Pelletierung oder Kompaktierung der Faser/Kunststoffmischung hat sich gezeigt, dass man ein homogeneres und besser dispergierbares Zwischenprodukt erhält, wenn der Kunststoff in feiner Pulverform vorliegt.

Durch die schonende Herstellung der Pellets beziehungsweise Granulate sind diese im anschließenden Formgebungsverfahren besonders gut zu verarbeiten.

Das Zwischenprodukt besteht aus dem in Anspruch 1 definierten Material, zu dem jedoch zusätzliche Additive hinzukommen können, wie sie in der Kunststoffverarbeitung üblich sind (Haftvermittler, Hydrophobierungsmittel, flammhemmende Additive usw.). Damit besteht auch das Endprodukt voll und ganz aus dem Material des Zwischenproduktes. Bei dem Zwischenprodukt handelt es sich somit nicht etwa um einen Füllstoff, der als solcher nur zu einem Teil das Endprodukt bildet.

## Patentansprüche

1. Zwischenprodukt in Pellet- oder Granulatform zum Herstellen fester Körper mittels eines Spritzverfahrens, eines Extrudierverfahrens oder eines Gießverfahrens oder eines sonstigen Formgebungsverfahrens, mit den folgenden Merkmalen;
das Zwischenprodukt umfasst natürliche Fasern sowie Kunststoff;
die natürlichen Fasern liegen in einem Gewichtsanteil von höchstens 80 % des Gesamtgewichtes des Zwischenproduktes vor, bevorzugt zwischen 30 und 60 %;
der Kunststoff ist ein thermoplastischer Kunststoff mit einem Schmelzpunkt von unter 300 °C;
der thermoplastische Kunststoff hat eine Partikelgröße von 95 % kleiner 3 mm, bevorzugt 95 % < 1,5 mm;
der Feuchtigkeitsgehalt des Zwischenproduktes liegt bei höchstens 2,5 %; das Zwischenprodukt weist ein Schüttgewicht von 200 bis 1000 g/l auf, bevorzugt von 350 bis 850 g/l, **dadurch gekennzeichnet, dass** wenigstens 95 % der natürlichen Fasern eine maximale Länge von 250 µm aufweisen.

2. Zwischenprodukt nach Anspruch 1, **dadurch gekennzeichnet, dass** die natürlichen Fasern Holzfasern umfassen.

3. Zwischenprodukt nach Anspruch 1 oder 2, **dadurch gekennzeichnet, dass** die Fasern Weichholzfasem umfassen.

4. Zwischenprodukt nach einem der Ansprüche 1 bis 3, **dadurch gekennzeichnet, dass** hierin Additive, zum Beispiel Kopplungsmittel zwischen Kunststoffmatrix und Naturfasern wie zum Beispiel Maleinsäureanhydrid, Farbstoffe, Radikalfänger, Hydrophobisierungsmittel, enthalten sind.

5. Zwischenprodukt nach einem der Ansprüche 1 bis 4, **dadurch gekennzeichnet, dass** der Kunststoff Polyethylen, Polypropylen, Polyamid, Polyvinylchlorid oder Polystyrol ist.

6. Verfahren zum Herstellen eines festen Körpers, **dadurch gekennzeichnet, dass** ein Zwischenprodukt gemäß einem der Ansprüche 1 bis 5 verwendet wird.

7. Verfahren nach Anspruch 6, **dadurch gekennzeichnet, dass** das Endprodukt durch Extrudieren, Pressen oder Spritzgießen oder einen sonstigen Formgebungsprozess hergestellt wird.

8. Verfahren nach einem der Ansprüche 1 bis 7, **gekennzeichnet durch** die folgenden Merkmale:
zum Pelletieren wird eine Ringmatritzenpresse mit zwei oder mehr Kollern verwendet;
die Matrize weist einen Lochdurchmesser von 2 bis 10 mm sowie Presswege von 5 bis 150 mm auf.

9. Verfahren nach einem der Ansprüche 6 oder 7, **dadurch gekennzeichnet, dass** das Zwischenprodukt durch Kompaktieren auf einem Walzenkompaktor hergestellt wird.

10. Verfahren nach einem der Ansprüche 6 bis 9, **dadurch gekennzeichnet, dass** das Zwischenprodukt nach dem Pelletieren oder Kompaktieren granuliert wird.

11. Verfahren nach einem der Ansprüche 1 bis 10, **dadurch gekennzeichnet, dass** die Fasern vor dem Formgebungsprozess getrocknet werden.

## Claims

1. An intermediate product in the form of pellets or granules for producing solid bodies by means of an injection method, an extrusion method or a casting method or any other shaping method, having the following features:
the intermediate product comprises natural fibres as well as synthetic material;
the natural fibres are present in a weight portion of at most 80% of the total weight of the intermediate product, preferably comprised between 30 and 60%;
the synthetic material is a thermoplastic synthetic material with a melting point lower than 300°C;
the thermoplastic synthetic material has a particle size of 95% smaller than 3 mm, preferably 95 % < 1.5 mm;
the humidity content of the intermediate product amounts at most to 2.5%;
the intermediate product has a bulk weight of 200 to 1000 g/l,
preferably from 350 to 850 g/I, **characterised in that** at least 95% of the natural fibres have a maximum length of 250 µm;

2. The intermediate product according to claim 1, **characterised in that** the natural fibres comprise wood fibres.

3. The intermediate product according to claim 1 or 2, **characterised in that** the fibres comprise soft wood fibres.

4. The intermediate product according to one of the claims 1 to 3, **characterised in that** additives, for example coupling media between synthetic material matrix and natural fibres or maleic anhydride, colouring agents, radical scavengers, hydrophobing agents are contained therein.

5. The intermediate product according to one of the claims 1 to 4, **characterised in that** the synthetic material is polyethylene, polypropylene, polyamide, polyvinylchloride or polystyrol.

6. The method for manufacturing a solid body, **characterised in that** an intermediate product according to one of the claims 1 to 5 is used.

7. The method of claim 6, **characterised in that** the end product is produced by extrusion, pressing or injection moulding or any other shaping method.

8. The method according to one of the claims 1 to 7, **characterised by** the following features:
a ring die pelleting press with two or more rollers is used for pelletising;
the matrix has a hole diameter of 2 to 10 mm as well as press height strokes of 5 to 150 mm.

9. The method according to any of the claims 6 or 7, **characterised in that** the intermediate product is manufactured by compacting on a roller compactor.

10. The method according to one of the claims 6 to 9, **characterised in that** the intermediate product is granulated after pelletising or compacting.

11. The method according to one of the claims 1 to 10, **characterised in that** the fibres are dried before the shaping method.

## Revendications

1. Produit intermédiaire sous forme de pastilles ou de granulés pour la fabrication de corps solides à l'aide d'un procédé d'injection, d'une procédé d'extrusion ou d'un procédé de coulage ou tout autre procédé de formage, présentant les caractéristiques suivantes:
le produit intermédiaire comprend des fibres naturelles de même qu'un matériau synthétique;
les fibres naturelles sont présentes dans une proportion d'au plus 80% du poids total du produit intermédiaire, de préférence entre 30 et 60%;
le matériau synthétique est un matériau synthétique thermoplastique d'un point de fusion inférieur à 300°C;
le matériau synthétique thermoplastique possède une taille de particules de 95% au-dessous de 3 mm, de préférence 95 % < 1,5 mm;
la teneur en humidité du produit intermédiaire est de 2,5% au plus;
le produit intermédiaire présente une densité en vrac de 200 à 1000 g/l,
de préférence de 350 à 850 g/l, **caractérisé en ce qu'**au moins 95% des fibres naturelles possèdent une longueur maximale de 250 µm;

2. Produit intermédiaire selon la revendication 1, **caractérisé en ce que** les fibres naturelles comprennent des fibres de bois.

3. Produit intermédiaire selon la revendication 1 ou 2, **caractérisé en ce que** les fibres comprennent des fibres de bois tendre.

4. Produit intermédiaire selon l'une des revendications 1 à 3, **caractérisé en ce que** des additifs, par exemple agents de couplage entre matériau synthétique et fibres naturelles comme anhydride maléique, colorants, capteurs de radicaux, agents hydrophobes sont compris dans celui-ci.

5. Produit intermédiaire selon l'une des revendications 1 à 4, **caractérisé en ce que** le matériau synthétique est du polyéthylène, du polypropylène, du polyamide, du polychlorure de vinyle ou du polystyrol.

6. Procédé de fabrication d'un corps solide, **caractérisé en ce que** l'on utilise un produit intermédiaire selon l'une des revendications 1 à 5.

7. Procédé selon la revendication 6, **caractérisé en ce que** l'on obtient le produit final par extrusion, pressage ou moulage par injection ou tout autre procédé de formage.

8. Procédé selon l'une quelconque des revendications 1 à 7, présentant les caractéristiques suivantes:
on utilise pour la mise en pastilles une presse matricielle annulaire pourvue de deux cylindres ou plus;
la matrice présente un diamètre de trou de 2 à 10 mm de même que des courses de presse de 5 à 150 mm.

9. Procédé selon l'une des revendications 6 ou 7, **caractérisé en ce que** l'on obtient le produit intermédiaire par compactage sur un compacteur à cylindres.

10. Procédé selon l'une quelconque des revendications 6 à 9, **caractérisé en ce que** le produit intermédiaire est granulé après la mise en pastilles ou le compactage.

11. Procédé selon l'une quelconque des revendications 1 à 10, **caractérisé en ce que** l'on sèche les fibres en amont du procédé de formage.
